# FASCICULE DE BREVET EUROPEEN

(11) **EP 1 657 012 B1**
(45) Date de publication et mention de la délivrance du brevet: **11.01.2012**
(21) Numéro de dépôt: 04405698.4
(22) Date de dépôt: 12.11.2004
(51) Int. Cl.: B23B 27/08, B23B 27/16

(54) **Outil de coupe de décolletage**
Schneidwerkzeug
Cutting off tool

(43) Date de publication de la demande: 17.05.2006
(73) Titulaire: Applitec Moutier S.A., 2740 Moutier (CH)
(72) Inventeur: Champion, François, 2740 Moutier (CH); Schaller, Vincent, 2742 Perrefitte (CH)
(74) Mandataire: GLN

(56) Documents cités:
- EP-A- 1 287 929
- CH-A5- 693 021
- US-A- 5 682 803
- US-B1- 6 343 898

## Description

### Domaine technique

La présente invention se rapporte au domaine de l'usinage. Elle concerne, plus particulièrement, un outil de coupe comprenant une plaquette d'usinage et un porte-plaquette, destiné plus particulièrement au décolletage de pièces.

### Etat de la technique

De tels outils sont bien connus de l'homme du métier. Par exemple, le brevet CH 693 021 propose une plaquette dont les rainures forment un X, coopérant avec des sillons en X disposés sur le porte-plaquette. Le centre du X correspond au point de fixation de la plaquette sur le porte-plaquette, au [0003] moyen d'une vis unique.

On connaît également le document EP 1 287 929 qui forme la base du préambule de la revendication 1 et qui propose un porte-outil dont l'assise est munie d'une pluralité de creusures orientées radialement par rapport à un trou de fixation et réparties autour de lui en respectant une symétrie centrale. Un outil muni de bossages disposés selon cette symétrie et agencés pour coopérer avec les creusures peut être disposé dans différentes positions. Divers angles de coupe peuvent ainsi être obtenus.

Or, pour que les conditions d'usinage soient satisfaisantes, il est nécessaire que les quatre branches du X ou que les bossages de l'outil soient situés dans un même plan, sans quoi la stabilité de la plaquette ou de l'outil sur le porte-plaquette ou sur le porte-outil, respectivement, n'est pas propice. Ceci peut requérir une étape de rectification dans le procédé de réalisation de la plaquette, ce qui en augmente sensiblement le coût.

Pour éviter une telle étape supplémentaire, le document PCT/CH 2004/000477 au nom de la demanderesse, décrit une plaquette de coupe comportant une pluralité de rainures longitudinales, coopérant avec des sillons disposés de façon similaire sur le porte-plaquette. Les appuis sont répartis entre les différents sillons et rainures, ce qui crée une sorte de plan moyen entre le porte-plaquette et la plaquette. Les éventuelles erreurs de dimensions des rainures sont moyennées entre ces différents appuis, pour donner un résultat final globalement satisfaisant et équilibré.

Cependant, pour que les erreurs puissent être moyennées, les rainures doivent présenter une précision suffisante, de l'ordre de 0,5%. Ceci est particulièrement problématique dans le cas des plaquettes frittées. Un frittage permet d'utiliser des matériaux de grande dureté, mais lors du refroidissement suivant le frittage, la plaquette subit des déformations difficilement maîtrisables à ce degré de précision.

Un premier but de l'invention est de proposer un outil de coupe dont la fabrication exige une précision de frittage facile à obtenir, sans nécessiter de rectification.

Par ailleurs, si les appuis ne sont pas également répartis entre les différents points de contacts de la plaquette avec le porte-plaquette, la charge que l'usinage engendre s'exerce davantage sur les points présentant un engagement plus fort. Ceci n'est pas favorable pour les conditions d'usinage et peut entraîner une détérioration rapide de la plaquette.

Un autre but de l'invention est de fournir un outil de coupe garantissant une répartition optimale des appuis et des contraintes de l'usinage.

Dans une variante avantageuse, la plaquette présente un bossage de renfort dans sa portion de fixation et l'assise du porte-plaquette comporte un dégagement de dimension supérieure à celle du bossage de renfort.

Les modes de réalisation ci-dessus sont compatibles avec une plaquette dotée d'une deuxième aile munie d'une arête de coupe et disposée symétriquement selon une symétrie centrale dont le centre est le milieu du trou de la plaquette par rapport à la première aile. La plaquette présente alors des bossages formant une deuxième structure en Y disposée symétriquement selon cette symétrie centrale par rapport à la première structure en Y. L'assise du porte-plaquette comporte alors des dégagements de dimensions supérieures à celles des bossages de la deuxième structure.

La stabilité conférée par la structure en Y des bossages permet d'obtenir un outil de coupe dont l'angle formé par les parois des bossages est inférieur à 90°. En variante, la section des bossages est trapézoïdale, l'angle formé par les deux côtés non parallèles étant compris entre 30 et 90°.

### Divulgation de l'invention

De façon plus précise, l'invention concerne un outil de coupe à plaquette rapportée comportant :
- une plaquette d'usinage qui comprend :
   o une portion de fixation comprenant un trou la traversant de part en part, une face d'appui, et des bossages disposés sur ladite face d'appui,
   o une première aile munie d'une arête de coupe (16
   o une deuxième aile munie d'une arête de coupe disposée symétriquement selon une symétrie centrale dont le centre est le milieu dudit trou par rapport à ladite première aile,
- un porte-plaquette d'axe longitudinal BB comprenant un logement doté d'une assise destinée à coopérer avec la portion de fixation, munie de creusures disposées et dimensionnées de manière à coopérer avec les bossages et percée d'un trou, et
- une unique vis de fixation engagée dans les trous.

Selon l'invention, la plaquette présente des bossages formés par des plots disposés en une première et en une deuxième structures en Y, les axes de ces plots se coupant en un même point, la deuxième structure en Y étant disposée symétriquement selon la symétrie centrale mentionnée ci-dessus, par rapport à la première structure en Y. En outre, l'assise du porte-plaquette comporte des dégagements de dimension supérieure à celle des bossages de la deuxième structure et disposés de manière à les loger.

Pour au moins une des structures, un premier plot est disposé selon un axe CC sensiblement parallèle à l'axe BB et passant par le centre du trou de la plaquette et les deuxième et troisième plots sont disposés de part et d'autre de l'axe CC.

Avantageusement, pour donner une meilleure stabilité à la plaquette de coupe, les deuxième et troisième plots sont disposés du côté de l'arête de coupe.

Selon un premier mode de réalisation, les deuxième et troisième plots sont disposés symétriquement par rapport à l'axe CC.

Selon un deuxième mode de réalisation, le deuxième plot étant le plus proche de l'arête de coupe, l'angle qu'il forme avec l'axe CC est plus grand que celui formé par le troisième plot avec cet axe.

### Brève description des dessins

D'autres détails et avantages de l'invention apparaîtront plus clairement à la lecture de la description qui suit, faite en référence au dessin annexé dans lequel :
- la figure 1 est une vue en perspective d'un porte-plaquette et d'une plaquette selon un mode de réalisation particulier, et
- les figures 2, 3 et 4 montrent trois modes de réalisation de l'invention illustrant, en a, une plaquette et, en b, un porte-plaquette.

### Mode(s) de réalisation de l'invention

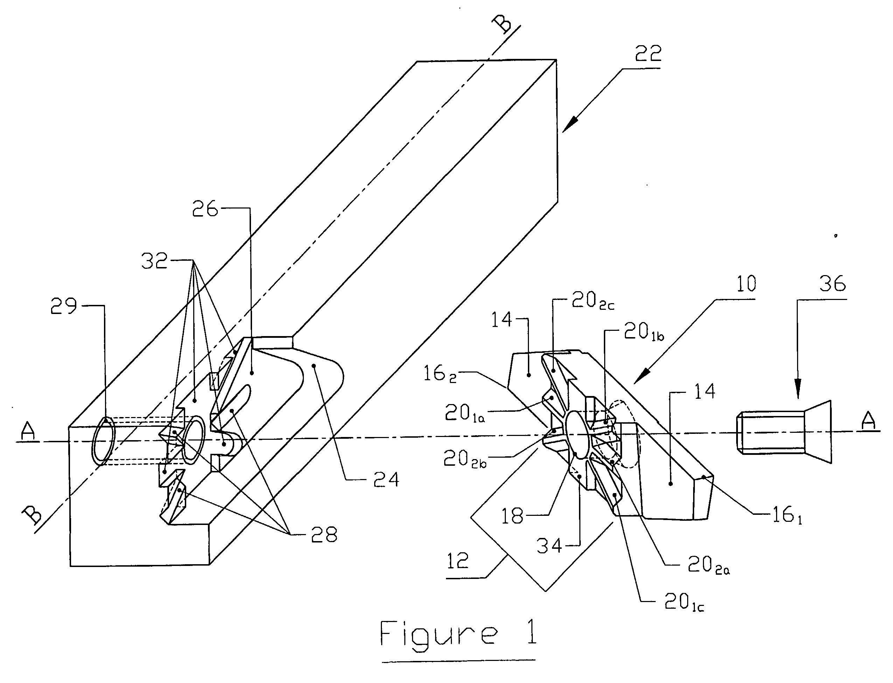

On a représenté sur la figure 1 une plaquette d'usinage 10. Elle comprend une portion centrale de fixation 12 et deux ailes 14 disposées de part et d'autre de la portion centrale, chacune étant munie d'une arête de coupe 16 pour assurer une fonction d'usinage. La portion centrale 12 comprend un trou cylindrique 18 d'axe AA la traversant de part en part et une face d'appui dotée de bossages 20. La plaquette 10 présente une symétrie centrale dont le centre est le milieu du trou 18.

Un porte-plaquette 22, d'axe longitudinal BB, perpendiculaire à l'axe AA comporte un logement 24 permettant de recevoir la plaquette de coupe 10. Une des parois du logement 24 forme une assise 26 munie de creusures 28 destinées à coopérer avec les bossages 20 de la plaquette 10. Un trou 29, éventuellement traversant, est destiné à recevoir une unique vis de fixation 36. Cette dernière, avantageusement de type conique, prend place dans les trous 18 et 29 afin de solidariser la plaquette de coupe 10 sur le porte-plaquette 22.

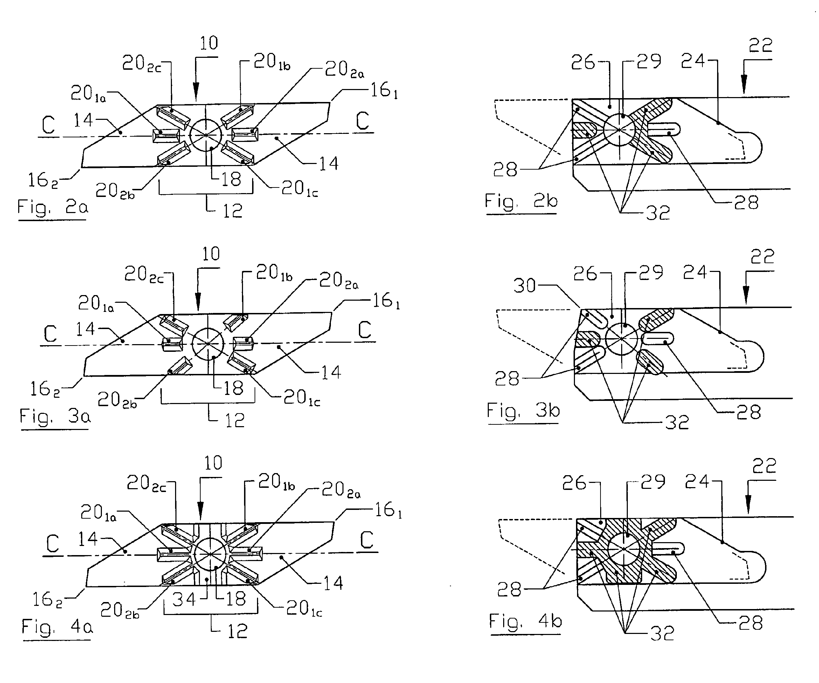

Dans un premier mode de réalisation particulièrement illustré sur la figure 2a, afin d'assurer le positionnement de la plaquette 10 sur le porte-plaquette 22 pour utiliser la première arête de coupe 161, dite arête active, les bossages 20 de la plaquette 10 forment une première structure en Y 20₁. Celle-ci est constituée par trois plots de forme oblongue, un premier 20₁a d'axe CC sensiblement parallèle à l'axe BB et deux autres 20₁b, 20₁c, formant les branches du Y. Ces derniers 20₁b et 20₁c sont symétriques l'un de l'autre par rapport à CC. Les axes des trois plots se coupent en un même point. Avantageusement, comme le montrent les figures, ce point est le centre du trou 18.

Les plots 20₁b et 20₁c sont situés du côté de l'arête de coupe active 161, c'est-à-dire vers l'extrémité du porte-plaquette 22. Ils assurent une fonction de stabilisation de l'outil, ils sont donc placés au plus près des zones de contrainte.

Les creusures 28 du porte-plaquette, visibles sur la figure 2b, sont disposées et dimensionnées de manière à coopérer avec les plots 20₁ de la plaquette 10.

Pour permettre le retournement de la plaquette 10 et l'utilisation de la deuxième arête de coupe 16₂, la plaquette 10 présente une deuxième structure en Y 20₂ disposée symétriquement par rapport à la première, selon la symétrie centrale déjà mentionnée. La plaquette présente ainsi une structure en double Y.

Le positionnement de la plaquette n'est assuré que par l'une des deux structures en Y, à savoir celle dont les deux plots indicés b et c sont situés du côté de l'arête de coupe active.

Pour que la deuxième structure en Y 20₂ n'engendre pas d'appui parasite, qui risquerait de perturber la répartition des charges sur les trois plots de la première structure en Y 20₁, le porte-plaquette 22 comporte des dégagements 32, particulièrement visibles sur la figure 2b, dimensionnés de manière à loger la structure en Y non utilisée, sans que celle-ci soit au contact du porte-plaquette 22. Ceci permet également de préserver la deuxième structure de toute usure avant qu'elle soit utilisée.

Lorsque la plaquette 10 est retournée pour utiliser la deuxième arête de coupe 16₂, la deuxième structure en Y 20₂ coopère avec les creusures 28, tandis que la première structure en Y 20₁ se loge dans les dégagements 32.

Lorsque la vis 36 est serrée, les bossages 20 de la structure en Y active sont appliqués contre les creusures 28 du porte-plaquette, ce qui permet de positionner et de centrer automatiquement la plaquette 10 sur le porte-plaquette 22. Si les plots sont bien disposés symétriquement, la répartition des appuis, et donc des contraintes engendrées par l'usinage, s'établit équitablement entre les éléments de la structure.

Dans un deuxième mode de réalisation de l'invention représenté sur la figure 3, les deux plots 20_{1b} et 20_{1c} ne sont pas symétriques par rapport à l'axe CC. Le plot 20_{1b} est le plus proche de l'arête de coupe active 161. L'angle qu'il forme avec l'axe CC est plus grand que celui formé par le plot 201c avec CC et la longueur du plot 20₁b est donc également inférieure à celle du plot 20₁c.

La plaquette présente aussi une deuxième structure en Y, symétrique à celle qui vient d'être décrite.

Comme dans le premier mode de réalisation, le porte-plaquette comporte des creusures 28 destinées à collaborer avec les bossages de la première structure en Y 20₁ et des dégagements 32 pour loger, sans créer d'appui, la deuxième structure en Y 20₂ non utilisée.

Le coin 30 du porte-plaquette situé en regard du plot indicé b, situé du côté de l'arête active, est biseauté. Toutefois, le biseau n'interrompt pas le logement du porte-plaquette destiné à recevoir le plot indicé a, correspondant à l'arête de coupe non active.

La structure en Y n'étant pas symétrique, la répartition des contraintes n'est pas égale entre les différents plots de la structure. Mais ce mode de réalisation permet un meilleur centrage et, lorsque l'on avance l'arête de coupe dans une pièce à usiner, d'engager la plaquette plus profondément dans la pièce.

Les appuis étant répartis autour du trou de serrage 18, la plaquette 10 subit une importante contrainte dans sa portion centrale 12.

Un troisième mode de réalisation visant à renforcer cette portion est représenté sur la figure 4. La portion centrale 12 de la plaquette comporte un bossage de renfort 34, disposé perpendiculairement aux axes BB et CC et symétriquement par rapport au centre de symétrie de la plaquette 10. Son épaisseur est sensiblement égale à celle des plots. Comme l'illustre particulièrement la figure 4a, les bossages des structures en Y 20 et celui de renfort 34 forment une surface continue.

En vis-à-vis de ce bossage de renfort 34, le porte-plaquette 22 comporte un dégagement 32 supplémentaire, destiné à loger le bossage 34 sans engendrer d'appui parasite.

Comme illustré, le bossage de renfort 34 peut être utilisé avec une structure en Y symétrique, comme pour le premier mode de réalisation. Mais, il va de soi qu'il s'adapte à une structure asymétrique, comme pour le deuxième mode de réalisation.

De manière conventionnelle, la section des bossages des structures en Y est de forme globale triangulaire. L'angle au sommet est généralement de l'ordre de 90°. Pour une plaquette dont les bossages sont parallèles, du type de celle décrite dans le document PCT déjà cité, des angles inférieurs entraînent une diminution de la stabilité de la plaquette et un risque de basculement. Ce n'est pas le cas dans la structure selon l'invention.

De manière avantageuse, la stabilité apportée par les plots 20₁b et 20₁c d'une part, et 20₂b et 20₂c d'autre part, permet de diminuer la valeur de cet angle au sommet, jusqu'à 50°. Même, des bossages de section trapézoïdale sont envisageables, l'angle formé par les deux côtés non parallèles pouvant aller jusqu'à 30°. L'engagement de la plaquette dans le porte-plaquette est ainsi plus fort, apportant une meilleure rigidité à l'outil.

La description ci-dessus n'a été donnée qu'à titre d'exemple et ne doit pas être interprétée de manière limitative. Il est bien évident qu'un outil comportant une plaquette comprenant une seule ou plus que deux arêtes de coupe et une seule ou plus que deux structures en Y, est inclus dans la portée de l'invention. Plus généralement, un outil dont la plaquette est dotée de n arêtes de coupe présente une ou des structures en Y obtenues l'une par rapport à l'autre par rotation de 360/n degrés.

De même, le point d'intersection des axes des plots peut ne pas être le centre du trou de serrage. Dans cette variante non représentée, un effet de serrage peut être obtenu en décalant légèrement, selon l'axe CC, la structure Y de la plaquette et celle des sillons du porte-plaquette.

Une vis à tête plate peut être utilisée, le positionnement de la plaquette étant alors uniquement assuré par la coopération des bossages et des creusures.

## Revendications

1. Outil de coupe à plaquette rapportée, comportant :
- une plaquette d'usinage (10) qui comprend
o une portion de fixation (12) comprenant un trou (18) la traversant de part en part, une face d'appui, et des bossages (20) disposés sur ladite face d'appui,
o une première aile (14) munie d'une arête de coupe (16),
o une deuxième aile (14) munie d'une arête de coupe (16) disposée symétriquement selon une symétrie centrale dont le centre est le milieu dudit trou (18) par rapport à ladite première aile,
- un porte-plaquette (22) d'axe longitudinal BB comprenant un logement (24) doté d'une assise (26) destinée à coopérer avec la portion de fixation (12), munie de creusures (28) disposées et dimensionnées de manière à coopérer avec lesdits bossages (20) et percée d'un trou (29), et
- une unique vis de fixation (36) engagée dans lesdits trous (18, 29), **caractérisé en ce que** ladite plaquette (10) présente des bossages (20) formés par des plots disposés en une première (20₁) et en une deuxième (20₂) structures en Y, les axes desdits plots se coupant en un même point, la deuxième structure en Y (20₂) étant disposée symétriquement selon ladite symétrie centrale par rapport à la première structure en Y (20₁), ladite assise du porte-plaquette comportant des dégagements (32) de dimension supérieure à celle des bossages de ladite deuxième structure et disposés de manière à les loger.

2. Outil de coupe selon la revendication 1, **caractérisé en ce que**, pour au moins une des dites structures, un premier plot (20a) est disposé selon un axe CC sensiblement parallèle audit axe BB et passant par le centre dudit trou (18) de la plaquette (10) et **en ce que** les deuxième (20b) et troisième (20c) plots sont disposés de part et d'autre dudit axe CC.

3. Outil de coupe selon la revendication 2, **caractérisé en ce que** lesdits deuxième (20b) et troisième (20c) plots sont disposés du côté de l'arête de coupe.

4. Outil de coupe selon l'une des revendications 1 et 2, **caractérisé en ce que** lesdits deuxième (20b) et troisième (20c) plots sont disposés symétriquement par rapport audit axe CC.

5. Outil de coupe selon la revendication 3, dans lequel ledit deuxième plot (20b) est le plus proche de l'arête de coupe (16), **caractérisé en ce que** l'angle formé par ledit deuxième plot (20b) avec l'axe CC est plus grand que celui formé par ledit troisième plot (20c) avec ledit axe CC.

6. Outil de coupe selon l'une des revendications précédentes, **caractérisé en ce que** ladite plaquette (10) présente un bossage de renfort (34) dans sa portion de fixation (12), ladite assise (26) du porte-plaquette (22) comportant un dégagement (32) de dimension supérieure à celle dudit bossage de renfort (34).

7. Outil de coupe selon l'une des revendications précédentes, **caractérisé en ce que** l'angle formé par les parois des bossages (20) est inférieur à 90°.

8. Outil de coupe selon la revendication 7, **caractérisé en ce que** la section des bossages est trapézoïdale, l'angle formé par les deux côtés non parallèles étant compris entre 30 et 90°.

## Claims

1. A cutting tool with an inserted tip, including:
- a machining tip (10) comprising:
o a fastening portion (12) comprising a hole (18) passing all the way through it, a support surface, and bosses (20) arranged on said support surface,
o a first wing (14) provided with a cutting edge (16),
o a second wing (14) provided with a cutting edge (16) arranged symmetrically following a central symmetry whereof the center is the middle of said hole (18) relative to said first wing,
- a tool holder (22) with a longitudinal axis BB comprising a housing (24) provided with a base (26) intended to cooperate with the fastening portion (12), provided with hollows (28) arranged and dimensioned so as to cooperate with said bosses (20) and pierced with a hole (29), and
- a single fastening screw (36) engaged in said hole (18, 29),
**characterized in that** said tip (10) has bosses (20) formed by lugs arranged in first (20₁) and second (20₂) Y-shaped structures, the axes of said lugs intersecting at a same point, the second Y-shaped structure (20₂) being arranged symmetrically following said central symmetry relative to the first Y-shaped structure (20₁), said base of the tool holder including recesses (32) with dimensions larger than those of the bosses of said second structure and arranged so as to house them.

2. The cutting tool according to claim 1, **characterized in that**, for at least one of said structures, a first lug (20a) is arranged along an axis CC substantially parallel to said axis BB and passing through the center of said hole (18) of the tip (10) and **in that** the second (20b) and third (20c) lugs are arranged on either side of said axis CC.

3. The cutting tool according to claim 2, **characterized in that** said second (20b) and third (20c) lugs are arranged on the side of the cutting edge.

4. The cutting tool according to one of claims 1 and 2, **characterized in that** said second (20b) and third (20c) lugs are arranged symmetrically relative to said axis CC.

5. The cutting tool according to claim 3, wherein said second lug (20b) is closest to the cutting edge (16), **characterized in that** the angle formed by said second lug (20b) with the axis CC is larger than that formed by said third lug (20c) with said axis CC.

6. The cutting tool according to one of the preceding claims, **characterized in that** said tip (10) has a reinforcing boss (34) in its fastening portion (12), said base (26) of the tool holder (22) including a recess (32) with a dimension larger than that of said reinforcing boss (34).

7. The cutting tool according to one of the preceding claims, **characterized in that** the angle formed by the walls of the bosses (20) is smaller than 90°.

8. The cutting tool according to claim 7, **characterized in that** the section of the bosses is trapezoidal, the angle formed by the two non-parallel sides being comprised between 30 and 90°.

## Patentansprüche

1. Schneidwerkzeug mit angesetzter Platte, das aufweist:
- eine Bearbeitungsplatte (10), die umfasst:
° einen Befestigungsabschnitt (12), der eine sie von einer zur anderen Seite durchquerende Öffnung (18) umfasst, eine Abstützseite und auf der Abstützseite angeordnete Höcker (20),
° einen ersten Flügel (14), der mit einer Schneidkante (16) ausgestattet ist,
° einen zweiten Flügel (14), der mit einer Schneidkante (16) ausgestattet ist, die gemäß einer zentralen Symmetrie symmetrisch angeordnet ist, deren Zentrum die Mitte der Öffnung (18) im Verhältnis zum ersten Flügel ist,
- einen Plattenhalter (22) mit einer Längsachse BB, der eine Aufnahme (24) umfasst, die mit einem Sitz (26) ausgestattet ist, der dazu bestimmt ist, mit dem Befestigungsabschnitt (12) zusammenzuarbeiten, der mit Hohlräumen (28) ausgestattet ist, die derart angeordnet und bemessen sind, dass sie mit den Höckern (20) zusammenarbeiten, und in den eine Öffnung (29) eingearbeitet ist, und
- eine einzige Befestigungsschraube (36), die in die Öffnungen (18, 29) eingeführt ist,
**dadurch gekennzeichnet, dass** die Platte (10) Höcker (20) aufweist, die von Stiften gebildet werden, die in einer ersten (20₁) und in einer zweiten (20₂) Y-Struktur angeordnet sind, wobei sich die Achsen der Stifte in einem selben Punkt schneiden, wobei die zweite Struktur (20₂) gemäß der zentralen Symmetrie im Verhältnis zur ersten Y-Struktur (20₁) symmetrisch angeordnet ist, wobei der Sitz des Plattenhalters Aussparungen (32) aufweist, die größere Abmessungen haben als die der Höcker der zweiten Struktur und derart angeordnet sind, dass sie aufgenommen werden.

2. Schneidwerkzeug nach Anspruch 1, **dadurch gekennzeichnet, dass** für mindestens eine der Strukturen ein erster Stift (20a) gemäß einer CC-Achse etwa parallel zur BB-Achse angeordnet ist und durch das Zentrum der Öffnung (18) der Platte (10) verläuft und dass der zweite (20b) und dritte (20c) Stift auf der einen und der anderen Seite der CC-Achse angeordnet sind.

3. Schneidwerkzeug nach Anspruch 2, **dadurch gekennzeichnet, dass** der zweite (20b) und dritte (20c) Stift auf der Seite der Schneidkante angeordnet sind.

4. Schneidwerkzeug nach einem der Ansprüche 1 und 2, **dadurch gekennzeichnet, dass** der zweite (20b) und dritte (20c) Stift symmetrisch im Verhältnis zur CC-Achse angeordnet sind.

5. Schneidwerkzeug nach Anspruch 3, wobei der zweite Stift (20b) der nächste zur Schneidkante (16) ist, **dadurch gekennzeichnet, dass** der vom dem zweiten Stift (20b) mit der CC-Achse gebildete Winkel größer ist als der Winkel, der von dem dritten Stift (20c) mit der CC-Achse gebildet wird.

6. Schneidwerkzeug nach einem der vorangehenden Ansprüche, **dadurch gekennzeichnet, dass** die Platte (10) einen Verstärkungshöcker (34) in ihrem Befestigungsabschnitt (12) aufweist, wobei der Sitz (26) des Plattenhalters (22) eine Aussparung (32) mit einer Abmessung aufweist, die größer ist als die des Verstärkungshöckers (34).

7. Schneidwerkzeug nach einem der vorangehenden Ansprüche, **dadurch gekennzeichnet, dass** der von den Wänden der Höcker (20) gebildete Winkel kleiner als 90° ist.

8. Schneidwerkzeug nach Anspruch 7, **dadurch gekennzeichnet, dass** der Querschnitt der Höcker trapezförmig ist, wobei der Winkel, der von den zwei nicht parallelen Seiten gebildet wird, zwischen 30 und 90° inklusive ist.
